Europäisches Patentamt

European Patent Office

Office européen des brevets

(11) Publication number: **0 164 779**
**B1**

(12) **EUROPEAN PATENT SPECIFICATION**

(45) Date of publication of patent specification: **26.04.89**

(21) Application number: **85200743.4**

(22) Date of filing: **10.05.85**

(51) Int. Cl.⁴: **B 29 C 61/00,** C 08 J 5/18,
D 01 F 6/04, D 06 M 10/00,
B 29 C 71/04

(54) Heat shrinkable material and articles.

(30) Priority: **11.05.84 NL 8401518**
**25.08.84 NL 8402600**
**28.09.84 NL 8402965**

(43) Date of publication of application:
**18.12.85 Bulletin 85/51**

(45) Publication of the grant of the patent:
**26.04.89 Bulletin 89/17**

(84) Designated Contracting States:
**BE CH DE FR GB IT LI NL SE**

(56) References cited:
**EP-A-0 055 510**
**FR-A-2 114 649**
**GB-A-1 603 638**
**US-A-3 022 543**

(73) Proprietor: **STAMICARBON B.V.**
**Mijnweg 1**
**NL-6167 AC Geleen (NL)**

(72) Inventor: **Lemstra, Pieter Jan**
**Walcundusstraat 3**
**NL-6444 TX Brunssum (NL)**

Courier Press, Leamington Spa, England.

## Description

The invention relates to heat shrinkable material and articles based on high-molecular polyethylene.

Polyolefinic articles, particularly fabrics, which shrink upon heating, are generally known, c.f. e.g. EP—A 118, 260. Such articles can be prepared by melt spinning of a polyolefine, especially polyethylene, with a relatively low molecular weight (about 80000 to 300000) to form a fibre, drawing said fibre and finally irradiating the drawn fibres.

A disadvantage of these known articles is that the shrink ratio upon heating is limited to 8—15 times, especially to at most 12 times. Furthermore it has been found that the articles obtained show a high creep and moreover have a low abrasion resistance.

The present invention now provides a material and articles which have a very high shrink ratio when heated, and moreover show a low creep and very high abrasion resistance.

The invention therefore relates to heat shrinkable material based on high molecular polyethylene, which material is obtained by:

a) thermoreversible gelation of a solution of a linear polyethylene having a weight-average molecular weight of at least $4\times10^5$ to form a gel material having virtually the same composition as the solution started from, and

b) irradiation of said gel material by electron irradiation or gamma-irradiation with a simultaneous or subsequent stretching at a stretch ratio of at least 15.

More specifically the invention relates to heat shrinkable articles based on high molecular polyethylene, which are obtained by:

a) providing a solution of a linear polyethylene having a weight-average molecular weight of at least $4\times10^5$;

b) transforming said solution by spinning or extruding into a shaped, solvent-containing article at a temperature above the gelling temperature of said solution;

c) cooling the article obtained in step b) to below the gelling temperature while forming an article with a homogeneous polymer gel structure, which has virtually the same composition as the starting solution from step a);

d) irradiating said article from step c) while in the gel-state;

e) stretching said gel-state article either during or after said irradiation with a total stretch ratio of at least 15, whether or not after at least partial removal of the solvent.

The heat shrinkable articles according to the invention may be filaments, fibres, ribbons, tapes, films, tubes, bars, etc. The invention particularly relates to tubes and tapes, and to fabrics woven from fibres.

"EP—A—0167187 filed by the same applicants, describes material consisting of polyethylene with low creep properties and its use, which material has been obtained by irradiation of the material in the state of a gel".

In the present invention use is made of a solution of a linear polyethylene with a weight average molecular weight of at least $4\times10^5$ and preferably of at least $8\times10^5$. In this connection high-molecular linear polyethylene is understood to mean polyethylene that may contain minor amounts, preferably 5 moles % at most, of one or more other alkenes copolymerized with it, such as propylene, butylene, pentene, hexane, 4-methylpentene, octene, etc., which polyethylene has more than 100 unbranched carbon atoms and preferably more than 300 unbranched carbon atoms between carbon atoms bearing a side chain. The polyethylene may contain minor amounts, preferably 25% (wt) at most, of one or more other polymers, particularly an alkene-1-polymer such as polypropylene, polybutylene or a copolymer of propylene with a minor amount of ethylene.

The polyethylene may further also contain substantial amounts of filler, as described in US—A—4,411,854. It may also be advantageous to use a polyethylene whose weight-average/number-average molecular weight ratio is lower than 5, as described in US—A—4,436,689.

As its molecular weight increases, the polyethylene is more difficult to process. The dissolution in a suitable solvent will be more time-consuming; the concentrations being the same, the solutions will be more viscous, so that lower concentrations must be relied upon, which is at the expense of the process efficiency. That is why in general no polyethylene will be used having molecular weights higher than $25\times10^6$, though it is possible to carry out the present process with higher molecular weights. The weight-average molecular weights can be determined according to methods known in the art by gel permeation chromatography and light scattering.

The polyethylene concentration in the solution may vary, depending in part upon the nature of the solvent and the molecular weight of the polyethylene. Solutions having a concentration of more than 50% (wt), particularly when using a polyethylene with a very high molecular weight, for instance higher than $3\times10^6$, are rather difficult to deal with on account of high viscosity that occurs. On the other side, the use of solutions with polyethylene concentrations lower than, for instance, 0.5% (wt) has the disadvantage of a loss of yield and an increase in the costs of separating off and recovering solvent.

Generally a polyethylene solution will therefore be started from having a concentration between 2 and 30% (wt), in particular 5—20% (wt).

The choice of the solvent is not critical. Any suitable solvent can be used, such as halogenated or non-halogenated hydrocarbons. In most solvents polyethylene can be dissolved only at temperatures of at least 90°C. If the solution is to be transformed e.g. by spinning, this will generally be effected in a space under atmospheric pressure. Low-boiling solvents will then be less desirable, because they may evaporate from the articles so rapidly that they will act more or less as foaming agents and will interfere with the structure of the articles.

The transformation of the solution into a shaped article can be carried out in various ways, e.g. spinning as described in e.g. US—A—4,344,908, US—A—4,422,993, US—A—4,430,383, US—A—4,411,854 or US—A—4,436,689.

Preferably, however, the preparation of the solution and also the transformation of the solution into a shaped article is carried out in a screw extruder, especially a co-rotating twin-screw extruder, operated at a rotational speed of from about 30 to about 300 revolutions/minute, and equipped with conveying and mixing sections. Generally herein a residence time of 0,5—45 minutes, a temperature above 90°C and mechanical shear rates between 5 and 2000 m/sec$^{-1}$ are applied.

Under rapid cooling solutions of polyethylene materials will change into a gel in the said concentration range below a critical temperature (gel point). In for instance spinning and extrusion a solution must be used and the temperature must therefore be above this gel point.

During the transformation the temperature of the solution is preferably at least 100°C and more specifically at least 120°C and the boiling point of the solvent is preferably at least 100°C and specifically at least equal to the transformation temperature. The solvent must not have a boiling point so high as to make it difficult for it to be evaporated from the articles obtained. Suitable solvents are aliphatic, cycloaliphatic and aromatic hydrocarbons with boilings points of at least 100°C, such as paraffins, paraffin waxes, xylenes, tetralin and decalin, but also halogenated hydrocarbons and other known solvents. On account of the low cost preference will mostly be given to non-substituted hydrocarbons, which also include hydrogenated derivatives of aromatic hydrocarbons.

The transformation temperature and the dissolution temperature must not be so high as to bring about substantial thermal decomposition of the polyethylene. These temperatures will therefore generally not be chosen higher than 240°C.

The shaped product obtained is cooled to below the gel point of the solution. This can be done in any suitable manner, for instance by passing the product into a liquid bath, through a shaft or onto a solid cooled surface. During the cooling to below the gel point of the polyethylene solution the polyethylene forms a gel. An article consisting of this gel has enough mechanical strength to be processed further, for instance via guides, rolls and the like.

The gel article thus obtained is subsequently irradiated. The gel may then still contain substantial amounts of solvent, up to amounts hardly lower than those present in the polyethylene solution. This is the case if the solution was transformed and cooled under conditions that did not promote the evaporation of the solvent, for instance by passing the article into a water bath.

The irradiation can be done by passing the article under a radiation source or between two or more radiation sources.

The radiation source applied may in the first place be an electron beam donor, but in principle a gamma radiation source may be used also. A survey of the customary radiation sources and methods is given in Rubber Chemistry and Technology 55 (1982) pages 575—668.

The radiation intensity applied in the process may vary, depending in part on the diameter or thickness of the product to be irradiated, a higher intensity being applied generally with products having a greater thickness or a larger diameter. The chosen radiation dosage is generally between 1 and 10 MRAD and preferably 3—7 MRAD.

The irradiation may be effected at reduced, elevated or atmospheric pressure and be carried out both at room temperature or at reduced or elevated temperature of the product. During the irradiation and/or between the irradiation and the stretching the gel articles are preferably kept in an inert practically oxygen-free environment.

The solvent-containing gel article obtained during cooling can in principle be irradiated. It is, however, also possible to remove part or almost all of the solvent from this gel article whereafter the gel article thus obtained is subjected to irradiation. Such removal of solvent is obligatory, if the solvent is susceptible to irradiation. Such removal of solvent is obligatory, if the solvent is susceptible to irradiation.

During or after the irradiation the articles are stretched with a total stretch ratio of at least 15. Preferably this stretch ratio is between 20 and 40 when stretching tubes, and at least 40 when stretching e.g. fibres or tapes. The stretching will be preferably carried out at elevated temperature, e.g. above 75°C, but is general below the melting point or dissolution point of the polyethylene, because above that temperature the mobility of the macromolecules will soon be so high that the desired orientation cannot be achieved or only to an insufficient degree. The intramolecular development of heat resulting from the stretching must be taken into account. At high rates of stretching the temperature in the articles may thus show a strong increase and care must be taken not to allow it to come near or, indeed, to exceed the melting point.

The articles can be brought to the stretching temperature by passing them into a zone containing a gaseous or liquid medium kept at the desired temperature. A tubular oven with air as gaseous medium is very suitable, but a liquid bath or any other appropriate device can be used also.

During the stretching (any) solvent present will be separated off from the article. This is promoted preferably by appropriate measures, such as carrying off the solvent vapour by passing a hot gas or air stream along the article in the stretching zone, or by stretching in a liquid bath comprising an extractant for the solvent, which extractant may optionally be the same as the solvent. The final product must be free of solvent and it is an advantage for the chosen conditions to be such that this state is reached already in the stretching zone, or at least virtually so.

The articles thus obtained show a low creep, a high abrasion resistance, and an extremely high shrink ratio upon heating. So it has been found that when heating said articles to a temperature near to or above the melting point of the polyethylene used (e.g. heating to 140—200°C), shrink ratio's of 20—40 in the case of tubes, and much higher shrink ratio's (e.g. up to and over 100) in the case of e.g. fibres and tapes are obtained. The articles according to the inventions therefore are very suitable for e.g. connecting, covering, tightening of various articles and materials. Furthermore the fibres according to the invention are excellently suitable to be woven to form fabrics.

So the present invention also relates to the use of a material based on high molecular polyethylene as highly shrinkable material upon heating, said material being obtained by:

thermoreversible gelation of a solution of a linear polyethylene having a weight-average molecular weight of at least $4 \times 10^5$ to form a gel material having virtually the same composition as the solution started from, and irradiation of said gel material by electron irradiation or gamma irradiation with simultaneous or subsequent stretching at a stretch ratio of at least 15.

More particularly the present invention relates to the use of an article based on high molecular polyethylene as highly shrinkable article upon heating, said article being obtained by:

a) providing a solution of a linear polyethylene having a weight-average molecular weight of at least $4 \times 10^5$;

b) transforming said solution by spinning or extruding into a shaped, solvent-containing article at a temperature above the gelling temperature of said solution;

c) cooling the article obtained in step b) to below to gelling temperature while forming an article with a homogeneous polymer gel structurem which has virtually the same composition as the starting solution from step a);

d) irradiation said article from step c) by electron irradiation or gamma irradiation while in the gel-state;

e) stretching said gel-state article either during or after said irradiation with a total stretch ratio of at least 15, whether or not after at least partial removal of the solvent.

The invention will be further elucidated in the following examples without, however, being restricted thereto.

Example I

To the feed zone of a co-rotating twin-screw extruder, the thermostatic temperature of which zone was set at 80°C, a finely divided ($\delta_{50}=90$ µm), high-molecular polyethylene of the Hostalen GUR 412® grade (of the firm of Ruhrchemie/Hoechst) with a weight-average molecular weight ratio of about $1.5 \times 10^6$ and decalin were supplied in a polyethylene:decalin weight ratio of about 1:30. The chosen extruder was of the ZSK type of the firm of Werner and Pfleiderer; L/D=27, provided with $2 \times 30$-mm screws composed of alternate conveying and kneading elements.

The temperature in the extruder was 170—180°C, the speed about 220 revolutions per minute.

After a residence time of 2.7 minutes the mixture obtained was carried off via an aperture (diameter 1 mm) at the other end of the extruder into a water batch, in which operation a solvent-containing gel filament was obtained having a homogeneous structure, which gel filament was passed through an extraction bath of dichloromethane. Thereafter the extracted filaments were passed, in an inert nitrogen environment, under the scanner of an HVE electron accelerator with a voltage of 3 MV. In this irradiation process a total dosage of 4.5 MRAD was applied.

Subsequently the filaments were stretched on a Schwabenthan stretching device, type A 3851 at a temperature of about 140—152°C with a total stretch ratio of about 60 times.

The stretched filaments were thereafter woven to form a fabric, which was air-heated to about 175°C. The fabric obtained shrunk in a ratio of about 58 times.

Example II

In the same way as in Example I a 3% (wt) suspension of Hostalen GUR 412® in decalin was treated in the extruder, which was provided with a slit-shaped outlet ($2 \times 20$ mm).

After quenching and extracting the resulting gel tapes were subjected to electron irradiation (5 MRAD), and stretched in a stretch ratio of 65 times. The resulting tapes were air-heated to 160°C for a few seconds and showed a shrinkage of above 63 times.

Example III

The process of Example II was repeated on the understanding that the irradiation dose was 7,5 MRAD and the stretch ratio 75 times.

Upon air-heating (190°) the tapes showed a shrinkage with a factor of about 72 times.

Example IV

The process of Example I was repeated on the understanding that a 5%-(wt) suspension of Hostalen GUR 412® was converted into a gel-fiber, which after irradiation in the gelstate (6 MRAD) was stretched (stretch ratio 50 times), and woven to a fabric.

Upon heating (175°) the fabric showed a shrinkage of about 48 times.

Example V

A 2%-(wt) solution of high-molecular polyethylen of the Hifax-1900® (Hercules) grade having a weight-average molecular weight of about $2 \times 10^6$

in decalin was spun at about 150°C via a spinning plate with apertures having a diameter of 1 mm.

After quenching in water and extraction in trichloroethylene the gelfilaments were subjected to electron irradiation (5 MRAD), stretched (stretch ratio about 110 times) and woven to a fabric.

Upon air-heating (185°C) the fabric showed a shrinkage of more than 100 times.

Example VI

In the same way as in Example II a 10%-(wt) suspension of Hifax-1900® in paraffine was treated in the extruder which was provided with a tube-shaped head (outer diameter about 14 mm, inner diameter about 12 mm).

The tube-shaped article leaving the extruder was quenched, extracted (trichloroethylene), electron irradiated (5 MRAD) and drawn in a draw ratio of about 20 times.

Upon heating to about 170°C the tube shrunk with a shrink ratio of about 18 times.

Example VII

The process of Example VI was repeated on the understanding that a 5%-(wt) suspension of Hifax-1900® in paraffine was used, and the gel-tube after irradiation (7 MRAD) was stretched in a stretch ratio of about 30 times.

Upon air-heating (180°C) the shrink ratio was about 28 times.

**Claims**

1. Heat shrinkable material based on high-molecular polyethylene, said material being obtained by:
   a) thermoreversible gelation of a solution of a linear polyethylene having a weight-average molecular weight of at least $4 \times 10^5$ to form a gel material having virtually the same composition as the solution started from, and
   b) irradiation of said gel material by electron irradiation or gamma irradiation with simultaneous or subsequent stretching at a stretch ratio of at least 15.

2. A heat shrinkable article based on high molecular polyethylene, said article being obtained by:
   a) providing a solution of a linear polyethylene having a weight-average molecular weight of at least $4 \times 10^5$;
   b) transforming said solution by spinning or extruding into a shaped, solvent-containing article at a temperature above the gelling temperature of said solution;
   c) cooling the article obtained in step b) to below the gelling temperature while forming an article with a homogeneous polymer gel structure, which has virtually the same composition as the starting solution from step a);
   d) irradiating said article from step c) by electron irradiation or gamma irradiation while in the gel-state;
   e) stretching said gel-state article either during or after said irradiation with a total stretch ratio of at least 15, whether or not after at least partial removal of the solvent.

3. A heat shrinkable article according to claim 2 which has been subjected to an electron irradiation at a level of from 1 up to 10 MRAD.

4. A heat shrinkable fabric woven from heat shrinkable fibres according to claim 2 or 3.

5. A heat shrinkable tape according to claim 2 or 3.

6. A heat shrinkable tube according to claim 2 or 3.

7. Use of a material based on high molecular polyethylene as highly shrinkable material upon heating, said material being obtained by:
   a) thermoreversible gelation of a solution of a linear polyethylene having a weight-average molecular weight of at least $4 \times 10^5$ to form a gel material having virtually the same composition as the solution started from, and
   b) irradiation of said gel material by electron irradiation or gamma irradiation with simultaneous or subsequent stretching at a stretch ratio of at least 15.

8. Use of an article based on high molecular polyethylene as highly shrinkable article upon heating, said article being obtained by:
   a) providing a solution of a linear polyethylene having a weight-average molecular weight of at least $4 \times 10^5$;
   b) transforming said solution by spinning or extruding into a shaped, solvent-containing article at a temperature above the gelling temperature of said solution;
   c) cooling the article obtained in step b) to below the gelling temperature while forming an article with a homogeneous polymer gel structure, which has virtually the same composition as the starting solution from step a);
   d) irradiating said article from step c) by electron irradiation or gamma irradiation while in the gel-state;
   e) stretching said gel-state article either during or after said irradiation with a total stretch ratio of at least 15, whether or not after at least partial removal of the solvent.

**Patentansprüche**

1. Wärmeschrumpfbares Material auf Basis von hochmolekularem Polyäthylen, welches Material erhalten wird durch:
   a) thermoreversible Gelierung einer Lösung eines linearen Polyäthylens mit einem gewichts-mittleren Molgewicht von mindestens $4 \times 10^5$ unter Bildung eines Gelmaterials mit faktisch der gleichen Zusammensetzung wie die Ausgangslösung und
   b) Bestrahlung dieses Gelmaterials durch Elektronenbestrahlung oder Gammabestrahlung mit gleichzeitigem oder anschließendem Strecken bei einem Streckverhältnis von mindestens 15.

2. Wärmeschrumpfbarer Gegenstand auf Basis von hochmolekularem Polyäthylen, welcher Gegenstand erhalten wird durch:

a) Vorsehen einer Lösung eines linearen Polyäthylens mit einem gewichtsmittleren Molgewicht von mindestens $4 \times 10^5$,

b) Überführen dieser Lösung durch Spinnen oder Extrudieren in einen geformten lösungsmittelhaltigen Gegenstand bei einer Temperatur oberhalb der Gelierungstemperatur dieser Lösung,

c) Kühlen des in Schritt b) erhaltenen Gegenstandes auf unterhalb Gelierungstemperatur, wobei ein Gegenstand mit einer homogenen Polymergelstruktur gebildet wird, der faktisch die gleiche Zusammensetzung hat wie die Ausgangslösung von Schritt a),

d) Bestrahlen des Gegenstandes von Schritt c) durch Elektronenbestrahlung oder Gammabestrahlung, während er sich im Gelzustand befindet,

e) Strecken des im Gelzustand befindlichen Gegenstandes entweder während oder nach der Bestrahlung mit einem Gesamtstreckverhältnis von mindestens 15, gegebenenfalls nach mindestens teilweiser Entfernung des Lösungsmittels.

3. Wärmeschrumpfbarer Gegenstand nach Anspruch 2, der einer Elektronenbestrahlung in einem Ausmaß von 1 bis 10 MRAD unterworfen wurde.

4. Wärmeschrumpfbares Gewebe gewebt aus wärmeschrumpfbaren Fasern nach Anspruch 2 oder 3.

5. Wärmeschrumpfbares Band nach Anspruch 2 oder 3.

6. Wärmeschrumpfbares Rohr nach Anspruch 2 oder 3.

7. Verwendung eines Materials auf Basis von hochmolekularem Polyäthylen als hoch schrumpfbares Material beim Erhitzen, welches Material erhalten wird durch:

a) thermoreversible Gelierung einer Lösung eines linearen Polyäthylens mit einem gewichtsmittleren Molgewicht von mindestens $4 \times 10^5$ unter Bildung eines Gelmaterials mit faktisch der gleichen Zusammensetzung wie die Ausgangslösung und

b) Bestrahlung dieses Gelmaterials durch Elektronenbestrahlung oder Gammabestrahlung mit gleichzeitigem oder anschließendem Strecken bei einem Streckverhältnis von mindestens 15.

8. Verwendung eines Gegenstandes auf Basis von hochmolekularem Polyäthylen als hoch schrumpfbarer Gegenstand beim Erhitzen, welcher Gegenstand erhalten wird durch:

a) Vorsehen einer Lösung eines linearen Polyäthylens mit einem gewichtsmittleren Molgewicht von mindestens $4 \times 10^5$,

b) Überführen dieser Lösung durch Spinnen oder Extrudieren in einen geformten lösungsmittelhaltigen Gegenstand bei einer Temperatur oberhalb der Gelierungstemperatur dieser Lösung,

c) Kühlen des in Schritt b) erhaltenen Gegenstandes auf unterhalb Gelierungstemperatur, wobei ein Gegenstand mit einer homogenen Polymergelstruktur gebildet wird, der faktisch die gleiche Zusammensetzung hat wie die Ausgangslösung von Schritt a),

d) Bestrahlen des Gegenstandes von Schritt c) durch Elektronenbestrahlung oder Gammabestrahlung, während er sich im Gelzustand befindet,

e) Strecken des im Gelzustand befindlichen Gegenstandes entweder während oder nach der Bestrahlung mit einem Gesamtstreckverhältnis von mindestens 15, gegebenenfalls nach mindestens teilweiser Entfernung des Lösungsmittels.

**Revendications**

1. Matériau thermorétrécissable à base de polyéthylène de haute masse moléculaire, ledit matériau étant obtenu par:

(a) une gélification thermoreversible d'une solution de polyéthylène linéaire ayant une masse moléculaire moyenne en poids d'au moins $4 \times 10^5$ pour former un gel ayant virtuellement la même composition que la solution de départ; et

(b) une irradiation dudit gel par irradiation aux électrons ou irradiation aux rayons gamma, avec étirage simultané ou ultérieur à un rapport d'étirage d'au moins 15.

2. Article thermorétrécissable à base de polyéthylène de haute masse moléculaire, article qu'on obtient:

(a) en fournissant une solution d'un polyéthylène linéaire ayant une masse moléculaire moyenne en poids d'au moins $4 \times 10^5$;

(b) en transformant ladite solution par filage ou extrusion en un article façonné contenant du solvant à une température au dessus de la température de gélification de ladite solution;

(c) en refroidissant l'article obtenu au stade (b) au dessous de la température de gélification tout en formant un article ayant une structure en gel polymère homogène, ayant virtuellement la même composition que la solution de départ du stade (a);

(d) en irradiant ledit article du stade (c) par irradiation aux électrons ou irradiation aux rayons gamma pendant qu'il est à l'état de gel;

(e) en étirant ledit article à l'état de gel pendant ou après ladite irradiation à un rapport total d'étirage d'au moins 15, après ou non l'élimination au moins partielle du solvant.

3. Article thermorétrécissable selon la revendication 2, qui a été soumis à une irradiation par des électrons à un niveau de 1 jusqu'à 10 MRAD.

4. Tissu thermorétrécissable tissé à partir des fibres thermorétrécissable selon la revendication 2 ou 3.

5. Bande thermorétrécissable selon la revendication 2 ou 3.

6. Tube thermorétrécissable selon la revendication 2 ou 3.

7. Utilisation d'un matériau à base de polyéthylène de haute masse moléculaire à titre de matériau hautement rétrécissable au chauffage, matériau qu'on obtient par:

(a) une gélification thermoréversible d'une solution de polyéthylène linéaire ayant une masse moléculaire moyenne en poids d'au moins $4\times10^5$ pour former un gel ayant virtuellement la même composition que la solution de départ; et

(b) irradiation dudit gel par irradiation aux électrons ou irradiation aux rayons gamma, avec étirage simultané ou ultérieur à un rapport d'étirage d'au moins 15.

8. Utilisation d'un article à base d'un polyéthylène de haute masse moléculaire à titre d'article hautement rétrécissable au chauffage, article qu'on obtient

(a) en fournissant une solution de polyéthylène linéaire ayant une masse moléculaire moyenne en poids d'au moins $4\times10^5$;

(b) en transformant ladite solution par filage ou extrusion en un article façonné contenant du solvant à une température au dessus de la température de gélification de ladite solution;

(c) en refroidissant l'article obtenu au stade (b) au dessous de la température de gélification tout en formant un article ayant une structure de gel polymère homogène ayant virtuellement la même composition que la solution de départ du stade (a);

(d) en irradiant ledit article du stade (c) par irradiation aux électrons ou irradiation aux rayons gamma pendant qu'il est à l'état de gel;

(e) en étirant ledit article à l'état de gel pendant ou après ladite irradiation suivant un rapport d'étirage total d'au moins 15, après ou non l'élimination au moins partielle du solvant.